# EUROPEAN PATENT SPECIFICATION

(11) **EP 2 965 975 B1**
(45) Date of publication and mention of the grant of the patent: **24.06.2020**
(21) Application number: 15175102.1
(22) Date of filing: 02.07.2015
(51) Int. Cl.: B62J 6/00, B62K 19/40, B62J 6/02

(54) **SUPPORT STRUCTURE FOR ON-VEHICLE ACCESSORY DEVICE OF SADDLE-RIDING TYPE VEHICLE**
TRAGSTRUKTUR FÜR EINE ZUBEHÖRVORRICHTUNG AN EINEM SATTELFAHRZEUG
STRUCTURE DE SUPPORT POUR DISPOSITIF ACCESSOIRE EMBARQUÉ POUR VÉHICULE À SELLE

(30) Priority: 09.07.2014 JP 2014141334
(43) Date of publication of application: 13.01.2016
(73) Proprietor: KAWASAKI JUKOGYO KABUSHIKI KAISHA, Hyogo 650-8670 (JP)
(72) Inventor: UCHIDA, Takashi, Hyogo 673-8666 (JP)
(74) Representative: Porta & Consulenti Associati S.p.A.

(56) References cited:
- EP-A1- 2 189 360
- EP-A1- 2 540 601
- CN-U- 203 032 815
- US-A- 5 727 864
- US-A1- 2014 167 387

## Description

### BACKGROUND OF THE INVENTION

### (Field of the Invention)

The present invention relates to a support structure that enables on-vehicle accessory devices such as auxiliary lamps mounted on both outer sides, of a saddle-riding type vehicle, in a vehicle widthwise direction to be supported on a vehicle body frame.

### (Description of Related Art)

In saddle-riding type vehicles such as motorcycles, auxiliary lamps, in addition to lamps required by regulation, are mounted in some cases such that visibility for riders is assured, or such that the vehicle can be viewed from other traffic vehicle drivers in an improved manner (for example, JP Laid-open Patent Publication No. 2013-252811). The auxiliary lamps include, for example, fog lamps which are lit up when view is obstructed, cornering lamps which are lit up for cornering, and the like.

In a case where paired left and right auxiliary lamps as described above are disposed on both outer sides, of a vehicle body, in a vehicle widthwise direction, the left and right auxiliary lamps are generally supported on a vehicle body frame through brackets, respectively. However, when the auxiliary lamps are individually supported on the vehicle body frame, vibration of the vehicle body during traveling, vibration of an engine, or the like is transmitted to the auxiliary lamps through the vehicle body frame, whereby undesired vibration may occur in the auxiliary lamps.

US-2014/0167387-A1 discloses a support structure for mounting side bags and the like to the rear portion of a motorcycle frame. EP-2540601-A1 discloses a motorcycle rear portion structure, suitable for mounting a fender on a rear wheel of a motorcycle. EP-2189360-A1 discloses a coupling structure of dashboard and headlight, suitable for mounting them on the head tube of a motorcycle. US 5727864 discloses a motorcycle light support assembly, including a light support bar. CN 203032815 U discloses a covering structure for the rear part of a motorcycle.

### SUMMARY OF THE INVENTION

An object of the present invention is to provide a support structure, for an on-vehicle accessory device of a saddle-riding type vehicle, which can reduce generation of undesired vibration.

In order to attain the above object, a support structure of the present invention is provided in accordance with claim 1. The support structure supports on-vehicle accessory devices on a vehicle body frame, which devices are mounted on outer sides, of a saddle-riding type vehicle, in a vehicle widthwise direction, lateral to a front fork and above the front wheel. The support structure includes: paired left and right to-be-supported portions supported by support portions formed on both sides, of the vehicle body frame, in the vehicle widthwise direction; a cross member, extending in the vehicle widthwise direction, and joining the paired left and right to-be-supported portions to each other; and mounting portions, joined to the to-be-supported portions or the cross member, to which the on-vehicle accessory devices, respectively, are mounted. In the description herein, the term "on-vehicle accessory device" means a device that is mounted to a vehicle as an auxiliary component, and includes, for example, an auxiliary lamp such as a fog lamp, a cornering lamp, and the like. Also, the "on-vehicle accessory device" does not include equipment, such as an engine or a steering handle, associated with traveling function, and security parts which are required by regulation.

In the above configuration, paired left and right to-be-supported portions are joined to each other by the cross member that extends in the vehicle widthwise direction, and the on-vehicle accessory devices are mounted to the mounting portions joined to the to-be-supported portions or the cross member. Therefore, the on-vehicle accessory devices are stably supported by the cross member, and undesired vibration of the on-vehicle accessory devices can be reduced. Further, the on-vehicle accessory devices are supported through the two to-be-supported portions on the vehicle body frame, whereby the on-vehicle accessory devices are more stably supported.

In the present invention, the on-vehicle accessory devices are preferably supported on the vehicle body frame through an elastic member for vibro-isolation. According to this configuration, for example, transmission of vibration of the vehicle body or the engine through the vehicle body frame to the on-vehicle accessory device is reduced due to the elastic member, whereby generation of undesired vibration in the on-vehicle accessory device can be reduced with enhanced effectiveness.

When the elastic member is provided, it is preferable that each of the to-be-supported portions is detachably supported through two or more fastening members by a corresponding one of the support portions, a fastening direction for at least one of the two or more fastening members is different from a fastening direction for the other of the fastening members, and each of the fastening members joins the to-be-supported portion and the support portion to each other through the elastic member. In the case of a so-called rubber mount that provides support through an elastic member, rigidity for the supporting in the direction different from the fastening direction may be reduced. However, According to this structure, the to-be-supported portion is provided by a plurality of fastening members which are different in fastening direction. Therefore, while reduction in rigidity for supporting can be suppressed, undesired vibration of the on-vehicle accessory device can be reduced.

When the elastic member is provided, each of the to-be-supported portions is preferably supported by a corresponding one of the support portions by using two fastening members including a first fastening member and a second fastening member at positions distant from each other in a front-rear direction, and a first fastening direction for the first fastening member and a second fastening direction for the second fastening member are preferably perpendicular to each other. According to this configuration, the four fastening portions are spaced from each other on an outline of a quadrangular shape, thereby stably supporting the on-vehicle accessory device. Further, the fastening direction for the first fastening member and the fastening direction for the second fastening member are perpendicular to each other. Therefore, even when a rubber mount is used, reduction in rigidity for the supporting is suppressed.

In the present invention, the support portions are formed on both sides, in the vehicle widthwise direction, of a fairing stay for supporting a front fairing that is supported by the vehicle body frame and that covers a front portion of a vehicle body, and the to-be-supported portions and the support portions are preferably covered by the front fairing from outer sides in the vehicle widthwise direction. According to this configuration, since the to-be-supported portions and the support portions are not seen from the outer side, an outward appearance of the vehicle is improved.

The support portions are formed in the fairing stay, the cross member is positioned below the fairing stay in front of a front fork, and is preferably formed into a U-shape that is opened rearward in a planar view. According to this configuration, the cross member can be disposed so as to avoid interference with the front fork.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view illustrating a front potion of a motorcycle that is one kind of a saddle-riding type vehicle having a support structure according to one preferred embodiment of the present invention;
Fig. 2 is an enlarged side view of the support structure;
Fig. 3 is a front view of the support structure;
Fig. 4 is a perspective view of the support structure as viewed from the diagonally front-lateral side;
Fig. 5 is an exploded perspective view of the support structure;
Fig. 6 is a front view of a lamp cover of an auxiliary lamp for the motorcycle;
Fig. 7 is an exploded perspective view of the lamp cover; and
Fig. 8 is a cross-sectional view of the support structure.

### DESCRIPTION OF PREFERRED EMBODIMENTS

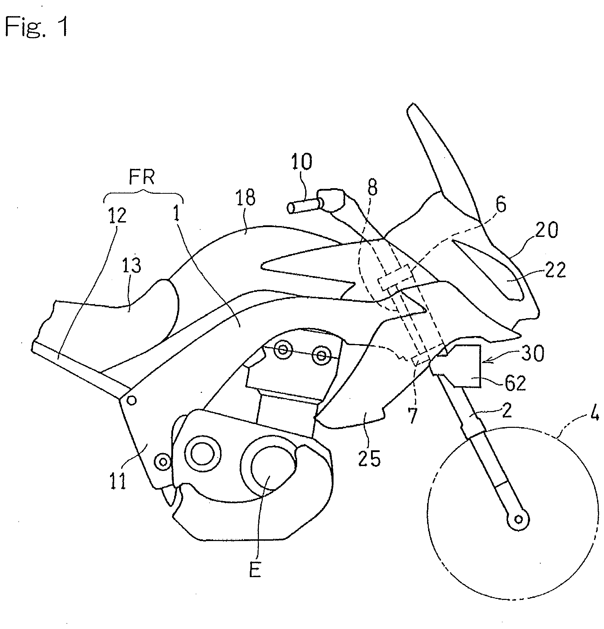

Hereinafter, a preferred embodiment of the present invention will be described with reference to the drawings. In the description herein, the left-right direction represents the left-right direction as viewed from a rider riding a motorcycle. In Fig. 1, the motorcycle of the present invention has a motorcycle frame structure or vehicle body frame FR, and the vehicle body frame FR includes a main frame 1 that forms a front half of the vehicle body frame FR and a rear frame 12 that is joined to the rear portion of the main frame 1 and forms a rear half of the vehicle body frame FR. A front fork 2 is supported at the front end of the main frame 1, and a front wheel 4 is supported at the lower end portion of the front fork 2. The front fork 2 is supported by an upper bracket 6 and a lower bracket 7, and the front fork 2 and these brackets 6, 7 are rotatably supported by a head pipe 8 mounted at the front end of the main frame 1. A steering handle 10 is mounted to the upper bracket 6.

On the other hand, a swing arm bracket 11 is fixed to the lower portion of the rear end of the main frame 1, and a swing arm that supports a rear wheel (not illustrated) is pivotally supported by the swing arm bracket 11 so as to be able to swing. A combustion engine E that is a motor for driving the rear wheel is supported below the center portion of the main frame 1.

A rider seat 13 is supported by the rear frame 12. A fuel tank 18 is supported above the main frame 1, that is, at the upper portion of the motorcycle body or vehicle body and between the head pipe 8 and the rider seat 13.

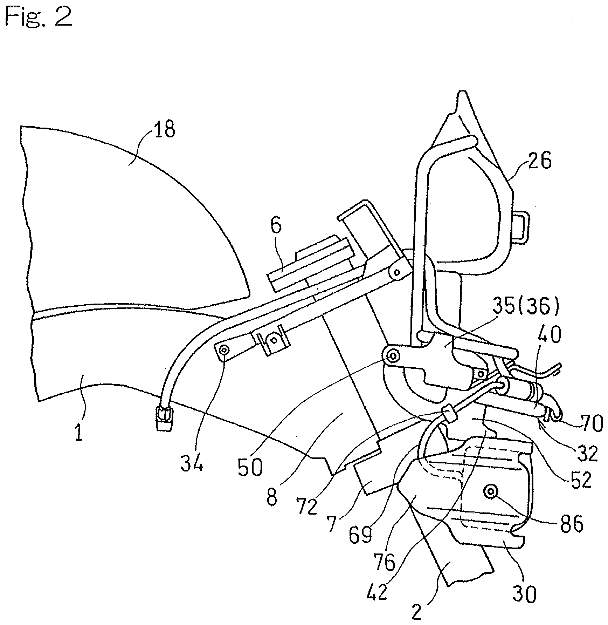

A front fairing 20 made of a resin is mounted in front of the vehicle body frame FR so as to cover a region in front of the head pipe 8, and a head lamp 22 is mounted to the front fairing 20. A side fairing 25 made of a resin is disposed in the rear of the front fairing 20, and covers a range from the outer lateral portion of the head pipe 8 to the outer lateral side in front of the combustion engine E. The side fairing 25 is provided as a pair of left and right side fairings. The front fairing 20 and the side fairings 25 are supported by the main frame 1 through a fairing stay 26 (Fig. 2).

Paired left and right auxiliary lamps 30 which are one kind of an on-vehicle accessory device are disposed on both sides, of the motorcycle, in a vehicle widthwise direction, and are supported on the main frame 1. The auxiliary lamps 30 of the present preferred embodiment are fog lamps that are lit up when view is obstructed. However, the auxiliary lamp 30 is not limited thereto, and may be, for example, a cornering lamp which is lit up during cornering. The on-vehicle accessory device is an accessory device that is not necessarily required for traveling of vehicles and driving of vehicles, and may be not only the auxiliary lamps 30, but also an on-vehicle camera, a distance measuring sensor, or an on-vehicle antenna. Further, the on-vehicle accessory device may be provided as paired left and right devices, or the on-vehicle accessory device may be provided on only one of the left and right sides.

Each auxiliary lamp 30 is disposed on the outer side lateral to the front fork 2 above the front wheel 4 and below the front portion of the side fairing 25 as viewed from the side thereof. The auxiliary lamp 30 is not joined directly to the front fork 2. The auxiliary lamp 30 will be described below in detail.

Figs. 2 to 4 are a side view, a front view, and a perspective view, respectively, of a support structure for the auxiliary lamps 30. As shown in Fig. 2, the auxiliary lamps 30 are mounted through a lamp stay 32 to the fairing stay 26 provided on the vehicle body frame side. In the description herein, the term "vehicle body frame side" includes a member such as the vehicle body frame FR, or the cowl 20, 25 or the fairing stay 26 supported by the vehicle body frame FR, as shown in Fig. 1.

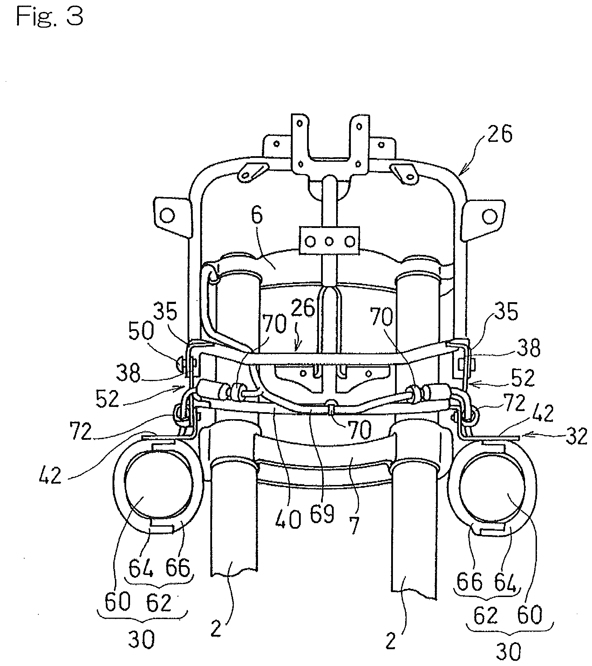

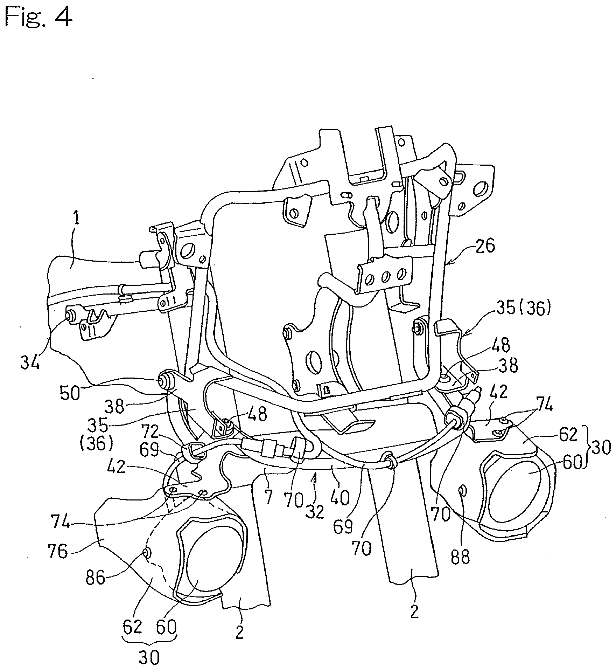

The fairing stay 26 shown in Fig. 2 is supported by the main frame 1 through a plurality of bolts 34, and the fairing stay 26 supports the head lamp 22, the front fairing 20, and the side fairing 25 in a known manner. As shown in Fig. 3, the fairing stay 26 has almost a closed quadrangular shape as viewed from the front thereof. As shown in Fig. 4, first brackets 35 to which the lamp stay 32 is mounted are provided on both sides, of the fairing stay 26, in the vehicle widthwise direction. However, the shape of the fairing stay is not limited thereto, and may be, for example, a shape that is opened forward or rearward.

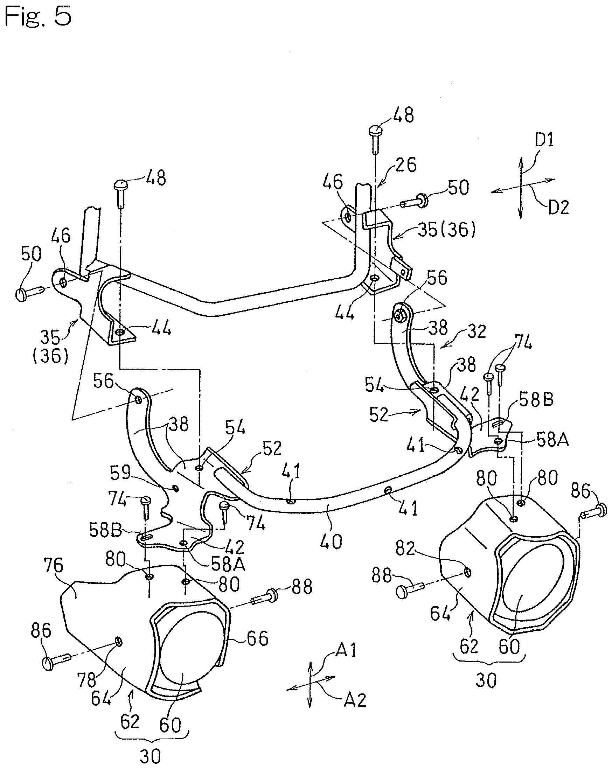

Each first bracket 35 is formed by bending a metal plate material, and is fixed to the lower portion of the fairing stay 26 by means of welding. The first brackets 35 form support portions 36 that support the lamp stay 32. Specifically, as shown in Fig. 5, each support portion 36 has two bolt insertion holes 44, 46 that are spaced from each other in a front-rear direction or a longitudinal direction. The front bolt insertion hole 44 is a through hole that extends almost in the up-down direction, and the rear bolt insertion hole 46 is a through hole that extends almost in the left-right direction (the vehicle widthwise direction).

That is, a first fastening direction (an up-down direction or a vertical direction) D1 in which a first fastening member 48 is inserted into the front bolt insertion hole 44, and a second fastening direction (the vehicle widthwise direction) D2 in which a second fastening member 50 is inserted into the rear bolt insertion hole 46, are almost perpendicular to each other. In the present preferred embodiment, the first and the second fastening members 48, 50 are implemented as bolts.

The lamp stay 32 includes a pair of left and right to-be-supported portions 38, 38 that are supported by the left and right support portions 36, 36, respectively, a cross member 40 that extends in the vehicle widthwise direction and joins the left and right to-be-supported portions 38, 38 to each other, and left and right mounting portions 42, 42 which are jointed to the left and right to-be-supported portions 38, 38, respectively and to which the left and right auxiliary lamps 30, 30 are mounted.

The cross member 40 is formed by curving a metal pipe to a U-shape that is opened rearward. The cross member 40 is disposed below the fairing stay 26 in front of the front fork 2, as shown in Fig. 4. The cross member 40 has a plurality of clamp engagement holes 41. Clamps 70 for fixing a lamp harness 69 shown in Fig. 3 are engaged with the clamp engagement holes 41. In the present preferred embodiment, the number of the clamp engagement holes 41 shown in Fig. 5 is three in total, in which one of the three clamp engagement holes 41 is formed in the center portion, of the cross member 40, in the vehicle widthwise direction, and two of the three clamp engagement holes 41 are formed on both sides, of the cross member 40, in the vehicle widthwise direction. However, the number and the positions of the clamp engagement holes 41 are not limited thereto.

The to-be-supported portion 38 and the mounting portion 42 are formed integrally with a second bracket 52 formed by bending a metal plate material. The paired left and right second brackets 52, 52 are fixed to the rear ends, respectively, of the U-shaped cross member 40 by means of welding. Thus, the to-be-supported portions 38, the mounting portions 42, and the cross member 40 are integrally formed by means of welding. The to-be-supported portions 38, the mounting portions 42, and the cross member 40 may be integrally formed by means of press-forming.

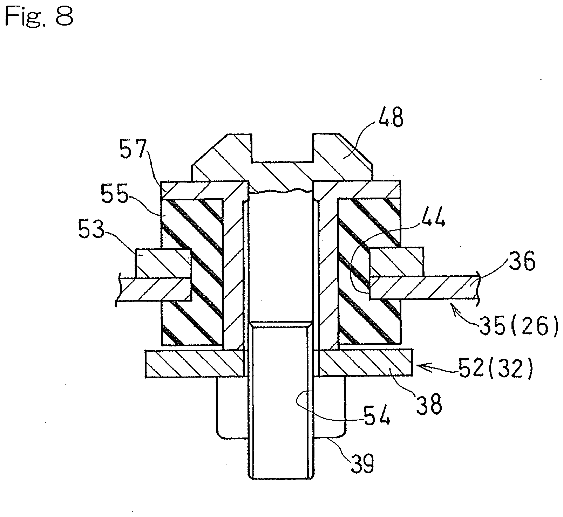

Specifically, the to-be-supported portion 38 is formed in the upper portion of each second bracket 52, and the mounting portion 42 is formed in the lower portion of each second bracket 52. Each to-be-supported portion 38 has two screw holes 54, 56 that are spaced from each other in the longitudinal direction so as to correspond to the two bolt insertion holes 44, 46 of the corresponding support portion 36. That is, the front screw hole 54 is a screw hole that extends in the up-down direction, and the rear screw hole 56 is a screw hole that extends in the left-right direction (vehicle widthwise direction). In the preferred present embodiment, the screw holes 54, 56 are formed as welding nuts 39 (Fig. 8) fixed to the to-be-supported portions 38. The support portions 36 and the to-be-supported portions 38 are covered by the front fairing 20 (Fig. 1) from the outer sides in the vehicle widthwise direction.

A support structure of the support portions 36 in the fairing stay 26 and the to-be-supported portions 38 of the lamp stay 32 is formed by a rubber mount. Specifically, as shown in Fig. 8, a cylindrical vibro-isolating elastic member 55 such as a grommet is press-fitted into the bolt insertion hole 44 of each support portion 36, and a cylindrical collar 57 having a flange on one end thereof is inserted into a hollow portion of the elastic member 55 for vibro-isolation. In Fig. 8, a disk-shaped spacer 53 is interposed between the support portion 36 and the elastic member 55. However, the spacer 53 may not be provided.

The first fastening member 48 is inserted into a hollow portion of the collar 57, and is then fastened into the screw hole 54, of the to-be-supported portion 38, formed as the welding nut. Although Fig. 8 shows the support portion 36 and the to-be-supported portion 38 on the front side, the support portion 36 and the to-be-supported portion 38 on the rear side also have the same structure. Thus, the auxiliary lamps 30 shown in Fig. 5 are supported on the vehicle body frame FR through the vibro-isolating elastic member 55 (Fig. 8), specifically, through the lamp stay 32, the elastic member 55 (Fig. 8), and the fairing stay 26.

In the present preferred embodiment, each to-be-supported portion 38 is detachably supported by the support portion 36 through the two fastening members, that is, the first and the second fastening members 48, 50 at positions distant from each other in the longitudinal direction. However, each to-be-supported portion 38 may be detachably supported by the support portion 36 through two or more fastening members. In this case, a fastening direction for at least one of the two or more fastening members may be different from a fastening direction for the other of the fastening members. Thus, the plurality of to-be-supported portions 38 are spaced from each other in the longitudinal direction on both the left and right sides, thereby enhancing rigidity for the supporting.

Each mounting portion 42 has two bolt insertion holes 58A, 58B that extend in the up-down direction. One of the bolt insertion holes 58A, 58B is a long hole or oval hole that is elongated in the vehicle widthwise direction, and the other thereof is a round hole. In the present preferred embodiment, the bolt insertion hole 58B on the rear side is an oval hole, and the bolt insertion hole 58A on the front side is a round hole. Up-down direction fastening members 74 are inserted into the bolt insertion holes 58A, 58B so as to mount the auxiliary lamps 30 to the mounting portions 42, respectively. A clamp engagement hole 59 that extends in the vehicle widthwise direction is formed between the to-be-supported portion 38 and the mounting portion 42 of each second bracket 52. A clamp 72 for fixing the lamp harness 69 as shown in Fig. 2 is engaged with the clamp engagement hole 59.

In the example shown in Fig. 5, the mounting portion 42 and the to-be-supported portion 38 are formed in the same second bracket 52. However, the mounting portion 42 and the to-be-supported portion 38 may be formed as separate members. In this case, the mounting portions 42 may be joined to the cross member 40 instead of the to-be-supported portions 38.

Each auxiliary lamp 30 shown in Fig. 4 includes a lamp device 60 that is a device body, and a lamp cover 62 which is made of a resin and covers the lamp device 60. In the present preferred embodiment, the lamp cover 62 covers the entirety of the upper side, lower side, and both the left and right sides of the lamp device 60. However, the lamp cover 62 may cover the entirety of the lamp device 60 in at least a side view and a planar view.

The lamp device 60 of the present preferred embodiment has a light emitter (not shown) that includes an LED, and has a heat sink (not shown) at the rear end portion thereof . The lamp harness 69 that extends toward the vehicle body is connected to the rear end of each lamp device 60. The lamp harness 69 is engaged with and fixed by the clamps 70 of the cross member 40 and the clamp 72 of each second bracket 52, and then extends toward the rear portion of the vehicle body, to be finally connected to a control unit (not shown) for performing electronic control of the entirety of the vehicle.

The lamp cover 62 has an outer side portion positioned on the outer side, of the lamp device 60, in the vehicle widthwise direction, and an inner side portion positioned on the inner side, of the lamp device 60, in the vehicle widthwise direction in a state where the lamp cover 62 is mounted to the vehicle body. The outer side portion is formed so as to be greater than the inner side portion as viewed from the side. In other words, an extending portion 76 that extends rearward is formed on an outer wall, of the lamp cover 62, which covers an outer side portion of the lamp device 60. Thus, the heat sinks of the lamp devices 60 and connecting portions where the lamp harness 69 is connected to the lamp devices 60 are not seen when viewed from the side as shown in Fig. 2, thereby improving an outward appearance of the vehicle.

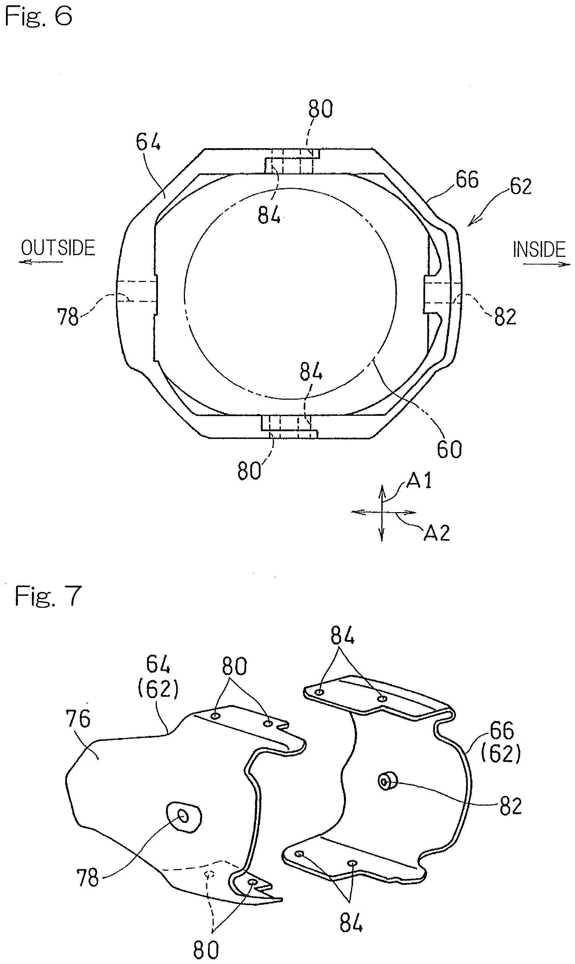

Fig. 6 is a front view of the lamp cover 62 of the auxiliary lamp 30 on the right side. As shown in Fig. 6, the lamp cover 62 has a structure in which the lamp cover 62 is divided into two portions, that is, left and right portions, so as to form two divisional parts 64, 66 that are separable in the left-right direction (the vehicle widthwise direction). Specifically, the two divisional parts are formed as an outer cover half 64 that is a first divisional part disposed on the outer side in the vehicle widthwise direction, and an inner cover half 66 that is a second divisional part disposed on the inner side in the vehicle widthwise direction. The outer cover half 64 and the inner cover half 66 are joined by the up-down direction fastening members 74 (Fig. 4) from the up-down direction in a state where the outer cover half 64 and the inner cover half 66 overlap each other such that a portion of the outer cover half 64 is positioned on the outer side in the up-down direction. Thus, the two divisional parts 64, 66 are joined to each other at a portion where the two divisional parts 64, 66 overlap each other, thereby enhancing rigidity in the joining portion.

The lamp cover 62 is formed into a vertically symmetric shape as viewed from the front thereof. In other words, the left and right lamp covers 62, 62 are formed into shapes that are horizontally symmetric with respect to the center line in the vehicle widthwise direction. Specifically, both the cover halves 64, 66 have the same shape and are disposed so as to be vertically inverted to each other, as shown in Fig. 7. That is, the vertically inverted shape of the right lamp cover 62 corresponds to the shape of the left lamp cover 62. As shown in Fig. 5, an outer lamp body mounting hole 78 is formed on an outer side wall of the outer cover half 64 of the lamp cover 62. The outer lamp body mounting hole 78 is in the form of a through hole that extends in the vehicle widthwise direction. The outer cover half 64 has an upper wall and a lower wall, and each of the upper wall and the lower wall has two connection holes 80 formed as through holes that extend in the up-down direction.

An inner lamp body mounting hole 82 is formed on an inner side wall of the inner cover half 66 of the lamp cover 62. The inner lamp body mounting hole 82 is in the form of a through hole that extends in the vehicle widthwise direction. The inner cover half 66 shown in Fig. 6 has an upper wall and a lower wall, and each of the upper wall and the lower wall has screw holes 84 that extend in the up-down direction, at positions corresponding to the connection holes 80 of the outer cover half 64. The screw holes 84 of the present preferred embodiment are formed as insert nuts.

An outer fastening member 86 formed as a bolt shown in Fig. 5 is inserted into the outer lamp body mounting hole 78 of the outer cover half 64 from the outer lateral side, and is then fastened into a screw hole (not shown) formed in the lamp device 60. Further, an inner fastening member 88 formed as a bolt is inserted into the inner lamp body mounting hole 82 of the inner cover half 66 from the inner side, and is then fastened into a screw hole (not shown) formed in the lamp device 60. Thus, the lamp devices 60 are mounted to the lamp covers 62.

The auxiliary lamps 30 are each mounted to the vehicle body such that the orientation thereof is adjustable around a predetermined first axis A1 and a predetermined second axis A2. In the present preferred embodiment, the first axis A1 extends in the up-down direction, and the second axis A2 extends in the left-right direction (the vehicle widthwise direction). However, directions of the first axis A1 and the second axis A2 are not limited thereto. Specifically, the lamp cover 62 of each auxiliary lamp 30 is detachably mounted onto the vehicle body frame side by means of the up-down direction fastening members 74 so as to be adjustable around the first axis A1. Further, each lamp device 60 is detachably mounted to the lamp cover 62 by means of the outer and the inner fastening members 86, 88 so as to be adjustable around the second axis A2.

That is, the up-down direction fastening members 74 are fastened in the up-down direction to detachably mount the lamp cover 62 to the vehicle body, and the up-down direction fastening members 74 are loosened to adjust the lamp cover 62 around the axis (the first axis A1) in the up-down direction relative to the vehicle body frame FR. Thus, the up-down direction fastening member 74 has three roles of mounting the auxiliary lamp 30 to the mounting portion 42, joining the outer and the inner cover halves 64, 66 to each other, and adjusting the optical axis of the auxiliary lamp 30 around the axis A1 in the up-down direction.

The optical axis of each auxiliary lamp 30 is adjusted around the axis A1 in the up-down direction by combination of the long hole and the fastening members. Specifically, the two up-down direction fastening members 74 are loosened, and the auxiliary lamp 30 is rotated around the front-side up-down direction fastening member 74 which serves as the rotation axis. The rear bolt insertion hole 58B is formed as the long hole, and the rear-side up-down direction fastening member 74 is thus guided by the long hole, to be moved. In such a simple structure, both mounting of the auxiliary lamp 30 and adjustment of the optical axis can be performed. The rear bolt insertion hole 58B formed as the long hole preferably has a shape of an arc of a circle in which the center is the rotation axis of the front-side up-down direction fastening member 74.

The outer and the inner fastening members 86, 88 are fastened in the vehicle widthwise direction to detachably mount the lamp device 60 to the lamp cover 62, and the outer and the inner fastening members 86, 88 are loosened to adjust the lamp device 60 around the axis (the second axis A2) in the vehicle widthwise direction relative to the lamp cover 62. Thus, the outer and the inner fastening members 86, 88 enable both mounting of the lamp device 60 to the lamp cover 62, and adjusting of the optical axis of the auxiliary lamp 30 around the axis A2 in the vehicle widthwise direction.

In the present preferred embodiment, the lamp cover 62 includes two divisional parts 64, 66 that are separable in the left-right direction (the vehicle widthwise direction). However, the lamp cover 62 may be formed as two divisional parts that are separable in a direction corresponding to a direction perpendicular to the axis in the longitudinal direction in a state where the lamp cover 62 is mounted to the vehicle body. Further, the two divisional parts may be joined to each other by either the up-down direction fastening members 74 or the outer and the inner fastening members 86, 88.

In the above structure, the paired left and right to-be-supported portions 38 are joined by the cross member 40 that extends in the vehicle widthwise direction, and the auxiliary lamps 30 are mounted to the mounting portions 42 formed integrally with the to-be-supported portions 38. Therefore, the cross member 40 allows the auxiliary lamps 30 to be stably supported, and undesired vibration of the auxiliary lamps 30 can be reduced.

The auxiliary lamps 30 are supported by the fairing stay 26 through the elastic member 55 shown in Fig. 8. Thus, transmission of vibration of the vehicle body or the combustion engine E shown in Fig. 1 through the main frame 1 to the auxiliary lamps 30 is reduced, whereby generation of undesired vibration in the auxiliary lamps 30 can be reduced with enhanced effectiveness.

Each to-be-supported portion 38 shown in Fig. 4 is detachably supported by the support portion 36 through the two fastening members, that is, the first and the second fastening members 48, 50, and the first fastening direction D1 for the first fastening member 48 and the second fastening direction D2 for the second fastening member 50 are perpendicular to each other. In the case of a rubber mount, rigidity for the supporting in the direction different from the fastening direction may be reduced. However, in the above structure, the to-be-supported portions 38 are supported with the use of the two fastening members 48, 50 which are different in the fastening direction. Therefore, while reduction in rigidity for supporting can be suppressed, undesired vibration of the auxiliary lamps 30 can be reduced.

Further, since the first fastening direction D1 and the second fastening direction D2 are perpendicular to each other, the four fastening portions are spaced from each other on an outline of a quadrangular shape, thereby stably supporting the auxiliary lamps 30.

Further, the to-be-supported portions 38 and the support portions 36 are covered by the front fairing 20 and the side fairing 25 shown in Fig. 1 from the outer side in the vehicle widthwise direction. Therefore, the to-be-supported portions 38 and the support portions 36 are not seen from the outer side, improving an outward appearance of the vehicle.

The cross member 40 shown in Fig. 4 is disposed below the fairing stay 26 and in front of the front fork 2, and is formed into a U-shape that is opened rearward, in a planar view. Therefore, the cross member 40 can be disposed so as to avoid interference with the front fork 2.

Moreover, the up-down direction fastening members 74 enable the lamp covers 62 to be supported on the vehicle body frame side, and the auxiliary lamps 30 to be adjusted around the first axis A1, and the outer and the inner fastening members 86, 88 enable the lamp devices 60 to be mounted to the lamp covers 62, and the auxiliary lamps 30 to be adjusted around the second axis A2. Thus, the auxiliary lamps 30 can be supported on the vehicle body, and the orientation thereof can be adjusted in the two directions, in a simple structure. Further, each auxiliary lamp 30 has the detachable lamp cover 62 that covers the lamp device 60. Therefore, even in a case where the lamp cover 62 is damaged, only the lamp cover 62 may be replaced, and the lamp device 60 can be continuously used. Therefore, the usability of the auxiliary lamps 30 is enhanced.

The outer side portion of each lamp cover 62 positioned on the outer side, of the lamp device 60, in the vehicle widthwise direction is formed so as to be greater than the inner side portion of the lamp cover 62 positioned on the inner side, of the lamp device 60, in the vehicle widthwise direction, as viewed from the side. By the outer side portion of the lamp cover 62 being enlarged, the lamp device 60 can be prevented from contacting with an external obstacle. Further, by the inner side portion of the lamp cover 62 being reduced in size, the weight and the cost of the lamp cover 62 can be reduced.

The lamp cover 62 shown in Fig. 6 is formed into a vertically symmetric shape as viewed from the front thereof. Therefore, by the cover being rotated by 180 degrees around the axis in the longitudinal direction, the lamp cover 62 can be common in both a case where the auxiliary lamp 30 is mounted on the right side of the vehicle body and a case where the auxiliary lamp 30 is mounted on the left side of the vehicle body.

Further, each lamp cover 62 is formed as the outer and the inner cover halves 64, 66 that are separable in the vehicle widthwise direction, and the outer and the inner cover halves 64, 66 are joined to each other by means of the up-down direction fastening members 74 shown in Fig. 4. Thus, the outer and the inner cover halves 64, 66 are joined to each other also by means of the up-down direction fastening members 74, whereby simplifying the structure of the auxiliary lamps 30.

Each lamp cover 62 is formed as the outer and the inner cover halves 64, 66 that are separable in the vehicle widthwise direction, whereby a line dividing the lamp cover 62 is not seen from the outer lateral sides of the vehicle body. Therefore, the outward appearance of the vehicle is improved.

In a state where the outer and the inner cover halves 64, 66 overlap each other such that a portion of the outer cover half 64 is put on the outer side, the outer and the inner cover halves 64, 66 are joined to each other by means of the up-down direction fastening members 74. Thus, the line dividing the lamp cover 62 is positioned closer to the inner side of the vehicle body, whereby such a dividing line is less likely to be seen from the outer lateral sides of the vehicle body. Therefore, outward appearance of the vehicle is improved.

Further, since the lamp covers 62 are mounted to the vehicle body by fastening force in the up-down direction D1, generation of rotational moment around the axis in the longitudinal direction in the lamp covers 62 can be reduced. As a result, rigidity with which the lamp covers 62 are supported on the vehicle body is likely to be assuredly obtained.

Each lamp cover 62 covers the entirety of the lamp device 60 at least in a side view and a planer view. Therefore, the lamp devices 60 are not seen from the outside of the vehicle body and a rider riding the vehicle. Thus, outward appearance of the vehicle is improved.

The present invention is applicable to saddle-riding type vehicles such as three-wheeled vehicles and four-wheeled buggies as well as motorcycles. Further, a driving source for the saddle-riding type vehicles is not limited to an engine, and may be, for example, an electric motor.

### Reference Numerals

- 1: main frame (vehicle body frame)
- 2: front fork
- 20: front fairing
- 26: fairing stay
- 30: auxiliary lamp (on-vehicle accessory device)
- 32: lamp stay
- 36: support portion
- 38: to-be-supported portion
- 40: cross member
- 42: mounting portion
- 48: first fastening member
- 50: second fastening member
- 55: elastic member
- D1: first fastening direction
- D2: second fastening direction

## Claims

1. A support structure for supporting on-vehicle accessory devices (30) on both outer sides of a saddle-riding type vehicle, in a vehicle widthwise direction, on support portions (36) that are formed on both sides of a fairing stay (26) in a vehicle widthwise direction, wherein said fairing stay (26) is adapted to support a front fairing (20) and a side fairing (25) to the front half of the vehicle body frame (FR), and wherein said support portions (36) are disposed on the outer side of said fairing stay (26) lateral to a front fork (2) and above a front wheel (4) of the vehicle, so that each on-vehicle accessory device is disposed on the outer side lateral to the front fork (2) above the front wheel (4) and below the front portion of the side fairing (25) as viewed from the side thereof; the support structure comprising:
paired left and right to-be-supported portions (38) for being supported by the support portions (36);
a cross member (40), extending in the vehicle widthwise direction, and joining the paired left and right to-be-supported portions (38) to each other; and
mounting portions (42), joined to the to-be-supported portions (38) or the cross member (40), to which the on-vehicle accessory devices (30), respectively, are adapted to be mounted.

2. The support structure as claimed in claim 1, wherein an elastic member (55) is provided so that the on-vehicle accessory devices (30) are adapted to be supported on the vehicle body frame (FR) through the elastic member (55) for vibro-isolation.

3. The support structure as claimed in claim 2, wherein
each of the to-be-supported portions (38) is adapted to be detachably supported through two or more fastening members (48, 50) by a corresponding one of the support portions (36),
a fastening direction for at least one of the two or more fastening members (48, 50) is different from a fastening direction for the other of the fastening members (48, 50), and
each of the fastening members (48, 50) is adapted to join the to-be-supported portion (38) and the support portion (36) to each other through the elastic member (55).

4. The support structure as claimed in claim 2, wherein
each of the to-be-supported portions (38) is adapted to be supported by a corresponding one of the support portions (36) by using two fastening members including a first fastening member (48) and a second fastening member (50) at positions distant from each other in a vehicle body front-rear direction, and
a first fastening direction for the first fastening member (48) and a second fastening direction for the second fastening member (50) are perpendicular to each other.

5. The support structure as claimed in any one of claims 1 to 4, wherein the to-be-supported portions (38) and the support portions (36) are adapted to be covered by the front fairing from outer sides in the vehicle widthwise direction.

6. The support structure as claimed in claim 5, wherein the cross member (40) is formed into a U-shape that is opened in a vehicle body rearward direction in a planar view, so that it can be positioned below the fairing stay (26) and in front of the front fork (2) of the vehicle.

7. The support structure as claimed in any one of claims 1 to 6, wherein the support structure is adapted for supporting a pair of left and right auxiliary lamps (30).

8. The support structure as claimed in any of claims 1 to 6, wherein the support structure is adapted for supporting an on-vehicle camera, a distance measuring sensor, or an on-vehicle antenna.

## Patentansprüche

1. Tragstruktur zum Tragen von Zubehörvorrichtungen (30) an beiden Außenseiten eines Sattelfahrzeugs in einer Fahrzeugbreitenrichtung auf Tragabschnitten (36), die auf beiden Seiten eines Verkleidungshalters (26) in einer Fahrzeugbreitenrichtung ausgebildet sind, wobei der Verkleidungshalter (26) dazu angepasst ist, eine Frontverkleidung (20) und eine Seitenverkleidung (25) an der vorderen Hälfte des Fahrzeugkarosserierahmens (FR) zu tragen, und wobei die Tragabschnitte (36) auf der Außenseite des Verkleidungshalters (26) seitlich zu einer Vordergabel (2) und oberhalb eines Vorderrads (4) des Fahrzeugs angeordnet sind, so dass jede Zubehörvorrichtung auf der Außenseite seitlich zur Vordergabel (2) oberhalb des Vorderrads (4) und unterhalb des vorderen Abschnitts der Seitenverkleidung (25), von der her Seite gesehen, angeordnet ist; wobei die Tragstruktur Folgendes umfasst:
gepaarte linke und rechte zu tragende Abschnitte (38) zum Tragen durch die Tragabschnitte (36);
einen Querträger (40), der sich in der Fahrzeugbreitenrichtung erstreckt und die gepaarten linken und rechten zu tragenden Abschnitte (38) miteinander verbindet; und
Montageabschnitte (42), die mit den zu tragenden Abschnitten (38) oder dem Querträger (40) verbunden sind, an denen die Zubehörvorrichtungen (30) jeweils montiert werden können.

2. Tragstruktur gemäß Anspruch 1, wobei ein elastisches Element (55) vorgesehen ist, so dass die Zubehörvorrichtungen (30) dazu angepasst sind, zur Schwingungsisolierung durch das elastische Element (55) auf dem Fahrzeugkarosserierahmen (FR) getragen zu werden.

3. Die Tragstruktur gemäß Anspruch 2, wobei
jeder der zu tragenden Abschnitte (38) dazu angepasst ist, lösbar durch zwei oder mehr Befestigungselemente (48, 50) durch einen entsprechenden der Tragabschnitte (36) getragen zu werden,
wobei sich eine Befestigungsrichtung für mindestens eines der zwei oder mehr Befestigungselemente (48, 50) von einer Befestigungsrichtung für das andere der Befestigungselemente (48, 50) unterscheidet, und
jedes der Befestigungselemente (48, 50) dazu angepasst ist, den zu tragenden Abschnitt (38) und den Tragabschnitt (36) durch das elastische Element (55) miteinander zu verbinden.

4. Die Tragstruktur gemäß Anspruch 2, wobei
jeder der zu tragenden Abschnitte (38) dazu angepasst ist, von einem entsprechenden der Tragabschnitte (36) getragen zu werden, indem zwei Befestigungselemente verwendet werden, einschließlich eines ersten Befestigungselements (48) und eines zweiten Befestigungselements (50) an Positionen, die in einer Front-Heckrichtung der Fahrzeugkarosserie voneinander beabstandet sind, und
wobei eine erste Befestigungsrichtung für das erste Befestigungselement (48) und eine zweite Befestigungsrichtung für das zweite Befestigungselement (50) senkrecht zueinander verlaufen.

5. Tragstruktur gemäß einem der Ansprüche 1 bis 4, wobei die zu tragenden Abschnitte (38) und die Tragabschnitte (36) dazu angepasst sind, durch die Frontverkleidung von den Außenseiten in Fahrzeugbreitenrichtung abgedeckt zu werden.

6. Tragstruktur gemäß Anspruch 5, wobei der Querträger (40) in U-Form ausgebildet ist, die in eine Heckrichtung der Fahrzeugkarosserie in einer Draufsicht geöffnet ist, so dass er unterhalb des Verkleidungshalters (26) und vor der Vordergabel (2) des Fahrzeugs positioniert werden kann.

7. Tragstruktur gemäß einem der Ansprüche 1 bis 6, wobei die Tragstruktur zum Tragen eines Paares von linken und rechten Zusatzscheinwerfern (30) angepasst ist.

8. Tragstruktur gemäß einem der Ansprüche 1 bis 6, wobei die Tragstruktur zum Tragen einer fahrzeugseitigen Kamera, eines Abstandsmesssensors oder einer fahrzeugseitigen Antenne angepasst ist.

## Revendications

1. Une structure de soutien destinée à soutenir des dispositifs accessoires embarqués (30) sur les deux côtés extérieurs d'un véhicule de type à selle, dans la direction de la largeur du véhicule, sur des portions de soutien (36) qui sont formées sur les deux côtés d'un support de carénage (26) dans le sens de la largeur du véhicule, dans laquelle ledit support de carénage (26) est conçu pour soutenir un carénage avant (20) et un carénage latéral (25) contre la moitié avant de l'ossature de carrosserie de véhicule (FR), et dans laquelle lesdites portions de soutien (36) sont disposées sur le côté extérieur dudit support de carénage (26) latéralement à une fourche avant (2) et au-dessus d'une roue avant (4) du véhicule, de sorte que chaque dispositif accessoire embarqué est disposé sur le côté extérieur latéralement à la fourche avant (2) au-dessus de la roue avant (4) et au-dessous de la portion avant du carénage de côté (25) tel que vu depuis le côté de celle-ci ; la structure de soutien comprenant :des portions en paire gauche et droite à soutenir (38) destinées à être soutenues par les portions de soutien (36) ;un élément transversal (40), s'étendant dans la direction de la largeur du véhicule, et joignant les portions appariées gauche et droite à soutenir (38) l'une à l'autre ; et
des portions de montage (42), jointes aux portions à soutenir (38) ou à l'élément transversal (40), sur lesquelles les dispositifs accessoires embarqués (30), respectivement, sont conçues pour être montés.

2. La structure de soutien telle que revendiquée dans la revendication 1, dans laquelle un élément élastique (55) est fourni de sorte que les dispositifs accessoires embarqués (30) sont conçus pour être soutenus sur l'ossature de carrosserie de véhicule (FR) par le biais de l'élément élastique (55) pour une vibro-isolation.

3. La structure de soutien telle que revendiquée dans la revendication 2, dans laquelle chacune des portions à soutenir (38) est conçue pour être soutenue de façon détachable par le biais de deux éléments de fixation ou plus (48, 50) par une portion correspondante parmi les portions de soutien (36),
une direction de fixation pour au moins un des deux éléments de fixation ou plus (48, 50) est différente d'une direction de fixation pour l'autre des éléments de fixation (48, 50), et
chacun des éléments de fixation (48, 50) est conçu pour joindre la portion à soutenir (38) et la portion à soutenir (36) par le biais de l'élément élastique (55).

4. La structure de soutien telle que revendiquée dans la revendication 2, dans laquelle
chacune des portions à soutenir (38) est conçue pour être soutenue par une portion correspondante parmi les portions de soutien (36) en utilisant deux éléments de fixation incluant un premier élément de fixation (48) et un deuxième élément de fixation (50) à des positions distantes l'une de l'autre dans une direction avant-arrière de corps de véhicule, et
une première direction de fixation pour le premier élément de fixation (48) et une deuxième direction de fixation pour le deuxième élément de fixation (50) sont perpendiculaires l'une à l'autre.

5. La structure de soutien telle que revendiquée dans l'une quelconque des revendications 1 à 4, dans laquelle les portions à soutenir (38) et les portions de soutien (36) sont conçues pour être recouvertes par le carénage avant à partir de côtés extérieurs dans la direction de la largeur du véhicule.

6. La structure de soutien telle que revendiquée dans la revendication 5, dans laquelle l'élément transversal (40) est formé en une forme de U qui est ouverte dans une direction arrière de corps de véhicule dans une vue planaire, de sorte qu'elle peut être positionnée au-dessous du support de carénage (26) et devant la fourche avant (2) du véhicule.

7. La structure de soutien telle que revendiquée dans l'une quelconque des revendications 1 à 6, dans laquelle la structure de soutien est conçue pour soutenir une paire de lampes auxiliaires gauche et droite (30).

8. La structure de soutien telle que revendiquée dans n'importe lesquelles des revendications 1 à 6, dans laquelle la structure de soutien est conçue pour soutenir une caméra embarquée, un capteur de mesure de distance, ou une antenne embarquée.
